# EUROPÄISCHE PATENTSCHRIFT

(11) **EP 2 782 720 B1**
(45) Veröffentlichungstag und Bekanntmachung des Hinweises auf die Patenterteilung: **21.08.2019**
(21) Anmeldenummer: 12790487.8
(22) Anmeldetag: 09.11.2012
(51) Int. Cl.: B25H 3/02, H02J 50/10

(54) **HANDWERKZEUGKOFFERHALTEVORRICHTUNG**
HOLDING DEVICE FOR THE CASING OF A HAND-HELD TOOL
DISPOSITIF DE FIXATION POUR MALLETTE D'OUTIL À MAIN

(30) Priorität: 22.11.2011 DE 102011086876
(43) Veröffentlichungstag der Anmeldung: 01.10.2014
(73) Patentinhaber: Robert Bosch GmbH, 70442 Stuttgart (DE)
(72) Erfinder: REJMAN, Marcin, 71332 Waiblingen (DE); AMANN, Volker, 86153 Augsburg (DE); LOHR, Guenter, 70771 Leinfelden-Echterdingen (DE); MACK, Juergen, 73035 Goeppingen (DE); HUBER, Brett, Arlington Heights, 60004 (US); HEINE, Christian, Mt. Prospect, 600562230 (US); DIETZEL, Friederike, 70469 Stuttgart (DE)
(86) Internationale Anmeldenummer: PCT/EP2012/072296
(87) Internationale Veröffentlichungsnummer: WO 2013/075956

(56) Entgegenhaltungen:
- EP-A1- 0 533 247
- EP-A1- 1 563 965
- EP-A2- 2 289 671
- KR-A- 20110 107 728
- US-A1- 2011 241 608
- US-B1- 6 218 796
- US-B1- 7 462 951

## Beschreibung

### Stand der Technik

Es ist bereits eine Handwerkzeugkofferhaltevorrichtung mit zumindest einer Ladespule, einem Kofferaufnahmebereich und einem Haltevorrichtungsgehäuse, das eine erste dem Kofferaufnahmebereich zugewandte Außenseite aufweist, vorgeschlagen worden.

Bekannte Vorrichtungen werden in der KR10-20110107728A, US6218796B1, US7462951B1 und US2011241608A1 offenbart.

### Offenbarung der Erfindung

Die Erfindung, wie in den Ansprüchen 1,5 und 8 dargestellt, geht aus von einer Handwerkzeugkofferhaltevorrichtung mit zumindest einer Ladespule, einem Kofferaufnahmebereich und einem Haltevorrichtungsgehäuse, das eine erste dem Kofferaufnahmebereich zugewandte Außenseite aufweist.

Es wird vorgeschlagen, dass das Haltevorrichtungsgehäuse wenigstens eine zweite in zumindest einem Betriebszustand dem Kofferaufnahmebereich zugewandte Außenseite aufweist, die im Wesentlichen senkrecht zu der ersten Außenseite ausgerichtet ist und an der die Ladespule angeordnet ist. Insbesondere soll unter einer "Ladespule" eine Spule verstanden werden, die bei einem Ladevorgang eine Energie empfängt und/oder sendet. Vorzugsweise sendet die Ladespule der Handwerkzeugkofferhaltevorrichtung bei einem Ladevorgang eine Energie, die eine in dem Kofferaufnahmebereich angeordnete Ladespule eines Handwerkzeugs und/oder vorteilhaft einen Handwerkzeugakku empfängt. Vorzugsweise umfasst die Ladespule zumindest eine Spulenwicklung und insbesondere einen Spulenkern. Alternativ oder zusätzlich könnte die Ladespule als Luftspule ausgebildet sein. Vorzugsweise ist die Ladespule als Leiterbahn auf einer Platine oder besonders bevorzugt als eine gewickelte Spule ausgebildet. Unter einem "Kofferaufnahmebereich" soll insbesondere ein Bereich verstanden werden, in dem ein Handwerkzeugkoffer zumindest bei einem Ladevorgang angeordnet ist. Vorzugsweise begrenzt ein Haltevorrichtungsgehäuse der Handwerkzeugkofferhaltevorrichtung den Kofferaufnahmebereich auf zumindest zwei Seiten, vorzugsweise mit der ersten und der zweiten Außenseite. Insbesondere soll unter einem "Handwerkzeugkoffer" ein Koffer verstanden werden, der in einem geschlossenen Zustand einen Werkzeugaufnahmebereich stoßgeschützt, feuchtigkeitsgeschützt und/oder staubgeschützt begrenzt. Vorzugsweise begrenzt der Handwerkzeugkoffer den Werkzeugaufnahmebereich zumindest teilweise in Form eines Handwerkzeugs und/oder eines Handwerkzeugakkus. Bevorzugt weist der Handwerkzeugkoffer zumindest ein Positionierungs- und/oder Fixierungsmittel zur Positionierung und/oder Fixierung eines Handwerkzeugs, eines Handwerkzeugs mit einem angeschlossenen Handwerkzeugakku und/oder besonders bevorzugt eines Handwerkzeugakkus auf. Vorzugsweise ist der Handwerkzeugkoffer magnetisch und/oder vorteilhaft elektrisch passiv. Insbesondere weist der Handwerkzeugkoffer keine Elektrik auf. Alternativ oder zusätzlich könnte der Handwerkzeugkoffer eine Ladespule und/oder vorteilhaft einen Magnetfeldleiter aufweisen, die/der die Energie empfängt und drahtgebunden und/oder magnetisch an einen Handwerkzeugakku weiterleitet. Vorzugsweise ist der Handwerkzeugkoffer entsprechend des in der Druckschrift DE 10 2008 058 007 B3 vorgeschlagenen Handwerkzeugkoffers ausgebildet, weist jedoch einen Handwerkzeugaufnahmebereich und/oder einen Handwerkzeugakkuaufnahmebereich auf, der dazu vorgesehen ist, bei einem Ladevorgang einen induktiv geladenen Handwerkzeugakku aufzunehmen. Insbesondere soll unter einem "Handwerkzeug" ein, dem Fachmann als sinnvoll erscheinendes tragbares Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Gartengerät, ein Baustellenmessgerät und/oder ein Multifunktionswerkzeug verstanden werden. Insbesondere soll unter einem "Haltevorrichtungsgehäuse" eine Einheit verstanden werden, die in einem betriebsbereiten Zustand zumindest die erste Außenseite, die zweite Außenseite und die Ladespule mechanisch verbindet. Vorzugsweise umschließt das Haltevorrichtungsgehäuse einen Innenraum, in dem vorteilhaft eine Ladeelektronik der Handwerkzeugkofferhaltevorrichtung angeordnet ist. Unter einer "Außenseite" soll insbesondere eine Ebene verstanden werden, die von einer durchschnittlichen Erstreckung einer Außenfläche aufgespannt ist. Vorzugsweise unterscheiden sich Bereiche der Außenfläche, die die Außenseite aufspannt, in ihrer Ausrichtung um weniger als 120 Grad, vorteilhaft um weniger als 60 Grad, besonders vorteilhaft um weniger als 30 Grad. Insbesondere erstreckt sich die Erstreckung der Außenfläche, die die Außenseite aufspannt, um mehr als 10 cm², vorteilhaft um mehr als 50 cm², besonders vorteilhaft um mehr als 250 cm². Insbesondere soll unter dem Begriff "zugewandt" verstanden werden, dass eine die Außenseite schneidende Senkrechte der Außenseite den Kofferaufnahmebereich schneidet. Unter der Wendung "im Wesentlichen senkrecht" soll insbesondere verstanden werden, dass die erste Außenseite und die zweite Außenseite einen Winkel einschließen, der zwischen 45 Grad und 135 Grad, vorteilhaft zwischen 60 Grad und 120 Grad, besonders vorteilhaft zwischen 75 und 105 Grad beträgt. Vorzugsweise beträgt der Winkel 90 Grad. Bevorzugt ist der Winkel auf einer Ebene angeordnet, die senkrecht zu den beiden Außenseiten ausgerichtet ist. Insbesondere soll unter "an der Außenseite angeordnet" in diesem Zusammenhang verstanden werden, dass die Ladespule zumindest teilweise weniger als 20 mm, vorteilhaft weniger als 10 mm, besonders vorteilhaft weniger als 5 mm, von der zweiten Außenseite beabstandet angeordnet ist. Durch die erfindungsgemäße Ausgestaltung der Handwerkzeugkofferhaltevorrichtung kann eine besonders stabile Befestigung eines Handwerkzeugkoffers in dem Kofferaufnahmebereich erreicht werden. Des Weiteren ist ein besonders komfortables Positionieren des Handwerkzeugkoffers in einer für einen Ladevorgang optimalen Position möglich.

In einer weiteren Ausgestaltung wird vorgeschlagen, dass die zweite Außenseite dazu vorgesehen ist, eine Stützkraft parallel zu der ersten Außenseite zu bewirken, wodurch bei einer vorteilhaften Kofferform eine stabile Befestigung erreicht werden kann. Insbesondere ist ein benutzerfreundliches Einbringen des Handwerkzeugkoffers in den Kofferaufnahmebereich möglich. Unter "vorgesehen" soll insbesondere speziell programmiert, ausgelegt und/oder ausgestattet verstanden werden. Insbesondere soll unter einer "Stützkraft" eine Kraft verstanden werden, die von einer elastischen Verformung unabhängig von der zweiten Außenseite auf den Handwerkzeugkoffer wirkt. Vorzugsweise wirkt die Stützkraft in zumindest einem Betriebszustand einer Gewichtskraft des Handwerkzeugkoffers, insbesondere auch bei einer Beschleunigung oder Verzögerung, entgegen.

Des Weiteren wird vorgeschlagen, dass die Ladespule dazu vorgesehen ist, eine Energie durch die zweite Außenseite insbesondere in den Kofferaufnahmebereich zu übertragen, wodurch eine Energieübertragung ohne blanke elektrische Kontakte und eine geschützte Anordnung der Ladespule möglich sind. Alternativ könnte die Ladespule zwischen der zweiten Außenseite und dem Kofferaufnahmebereich angeordnet sein. Unter der Wendung "durch die zweite Außenseite" soll insbesondere verstanden werden, dass die Ladespule die Energie als magnetisches Wechselfeld überträgt, das zu mehr als 50 Prozent einen Bereich der Außenseite durchdringt. Insbesondere soll unter "in den Kofferaufnahmebereich" verstanden werden, dass eine die Energie empfangende Ladespule bei einer Energieübertragung in dem Kofferaufnahmebereich, und zwar vorteilhaft in dem Handwerkzeugkoffer angeordnet ist. Vorzugsweise ist die die Energie empfangende Ladespule bei einem Ladevorgang in dem Kofferaufnahmebereich an der zweiten Außenseite angeordnet. Insbesondere soll unter dem Begriff "übertragen" verstanden werden, dass die Ladespule eine elektrische Energie mittels eines magnetischen Wechselfeldes an die in dem Kofferaufnahmebereich angeordnete Ladespule sendet. Vorzugsweise ist die in dem Kofferaufnahmebereich angeordnete Ladespule Teil des Handwerkzeugkoffers und/oder besonders bevorzugt Teil eines in dem Handwerkzeugkoffer angeordneten Handwerkzeugakkus.

Zudem wird vorgeschlagen, dass das Haltevorrichtungsgehäuse ein Kofferbefestigungsmittel umfasst, das den Kofferaufnahmebereich zu wenigstens 10 Prozent, vorteilhaft wenigstens 20 Prozent, besonders vorteilhaft wenigstes 40 Prozent, umschließt, wodurch eine besonders stabile Befestigung, insbesondere trotz eines Verzichts auf eine Haltevorrichtung, möglich ist. Unter dem "Kofferbefestigungsmittel" soll insbesondere ein Mittel des Haltevorrichtungsgehäuses verstanden werden, das dazu vorgesehen ist, insbesondere nur in von einer Entnahmerichtung abweichende Richtungen den Handwerkzeugkoffer formschlüssig zu befestigen. Insbesondere soll unter der Wendung "zu wenigstens 10 Prozent umschließen" verstanden werden, dass wenigstens 10 Prozent des Kofferaufnahmebereichs zwischen der ersten und/oder der zweiten Außenseite und einer Ebene angeordnet ist, die senkrecht zu der Entnahmerichtung ausgerichtet ist und die das Kofferbefestigungsmittel schneidet. Vorzugsweise umschließt das Kofferbefestigungsmittel den Kofferaufnahmebereich um mehr als 180 Grad, besonders bevorzugt um 360 Grad. Vorteilhaft ist das Kofferbefestigungsmittel zumindest teilweise einstückig mit anderen Bereichen des Haltevorrichtungsgehäuses ausgebildet. Vorzugsweise ist das Kofferbefestigungsmittel, insbesondere wenn kein Handwerkzeugkoffer in dem Kofferaufnahmebereich angeordnet ist, zusammenfaltbar ausgebildet. Vorzugzugsweise weist das Kofferbefestigungsmittel eine Form mit einem kleinen Toleranzmaß zu dem Handwerkzeugkoffer auf, die den Handwerkzeugkoffer in einem Betriebszustand, beispielsweise bei einer Fahrt in einem Kraftfahrzeug, befestigt.

Ferner wird vorgeschlagen, dass die Handwerkzeugkofferhaltevorrichtung eine Schwenkvorrichtung umfasst, die dazu vorgesehen ist, die Ladespule relativ zu der ersten Außenseite schwenkbar zu lagern, wodurch eine geringe Transportgröße und/oder eine flexible Verwendung möglich sind. Des Weiteren kann durch ein Wegschwenken der zweiten Außenseites bei einer großen Belastung eine Beschädigung durch eine mögliche zu große Belastung vermieden werden. Unter einer "Schwenkvorrichtung" soll insbesondere eine Vorrichtung verstanden werden, die eine Bewegung der Ladespule im Bezug auf die erste Außenseite um eine Schwenkachse ermöglicht. Vorzugsweise sind die erste Außenseite und die zweite Außenseite in einem eingeschwenkten Betriebszustand zumindest im Wesentlichen parallel ausgerichtet.

Weiterhin wird vorgeschlagen, dass die Handwerkzeugkofferhaltevorrichtung eine Haltevorrichtung aufweist, die dazu vorgesehen ist, einen Handwerkzeugkoffer lösbar zu befestigen, wodurch eine stabile und zuverlässige Befestigung und ein komfortables Einbringen des Handwerkzeugkoffers in den Kofferaufnahmebereich bei unterschiedlichen Anordnungen und Ausrichtungen der Handwerkzeugkofferhaltevorrichtung möglich ist. Unter einer "Haltevorrichtung" soll insbesondere eine Vorrichtung verstanden werden, die dazu vorgesehen ist, in zumindest einem Betriebszustand eine Bewegung des Handwerkzeugkoffers aus dem Kofferaufnahmebereich heraus zu verhindern. Bevorzugt verhindert die Haltevorrichtung in zumindest einem Betriebszustand eine Bewegung des Handwerkzeugkoffers von einer Richtung der Bewegung unabhängig. Vorzugsweise befestigt die Haltevorrichtung den Handwerkzeugkoffer zumindest bei einem Ladevorgang kraftschlüssig und/oder vorteilhaft formschlüssig. Insbesondere soll unter dem Begriff "lösbar" verstanden werden, dass die Haltevorrichtung den Handwerkzeugkoffer in einem Zustand befestigt und diese Befestigung in einem anderen Zustand von einem Bediener zerstörungsfrei und/oder reversibel getrennt ist. Vorzugsweise befestigt die Haltevorrichtung den Handwerkzeugkoffer werkzeuglos lösbar. Unter der Wendung "werkzeuglos lösbar" soll insbesondere verstanden werden, dass eine Verbindung der Haltevorrichtung mit dem Handwerkzeugkoffer von einem Bediener mit der Hand lösbar ausgebildet ist. Vorzugsweise weist die Haltevorrichtung zumindest ein Bedienelement auf, das bei einer Betätigung durch einen Bediener eine Befestigung des Handwerkzeugkoffers an der Haltevorrichtung löst.

In einer vorteilhaften Ausbildung der Erfindung wird vorgeschlagen, dass die Haltevorrichtung zumindest ein Haltemittel aufweist, das dazu vorgesehen ist, den Handwerkzeugkoffer zu verrasten, wodurch konstruktiv einfach eine besonders stabile, benutzerfreundliche und insbesondere selbsttätig schließende Befestigung möglich ist. Unter einem "Haltemittel" soll insbesondere ein Mittel verstanden werden, das in zumindest einem Betriebszustand zur Befestigung des Werkzeugkoffers eine Kraft direkt auf den Werkzeugkoffer bewirkt. Vorzugsweise ist das Haltemittel korrespondierend zu einem und/oder gemäß einem in der Druckschrift DE 10 2008 058 007 B3 vorgeschlagenem Haltemittel ausgebildet. Insbesondere soll unter "verrasten" verstanden werden, dass ein Haltemittel bei einem Befestigungsvorgang des Handwerkzeugkoffers elastisch ausgelenkt wird, um anschließend durch eine auf das Haltemittel wirkende Kraft hinter einem korrespondierenden Haltemittel einzuhaken. Vorzugsweise ist das elastisch auslenkbare Haltemittel an dem Handwerkzeugkoffer angeordnet und das korrespondierende Haltemittel an der Handwerkzeugkofferhaltevorrichtung angeordnet.

Des Weiteren wird vorgeschlagen, dass die Haltevorrichtung zwei Haltemittel aufweist, die auf zwei gegenüberliegenden Seiten des Kofferaufnahmebereichs angeordnet sind, wodurch konstruktiv einfach eine besonders zuverlässige und komfortabel bedienbare Befestigung möglich ist. Unter der Wendung "auf zwei gegenüberliegenden Seiten" soll insbesondere verstanden werden, dass die Haltemittel auf einer Geraden liegen, die den Kofferaufnahmebereich schneidet, und die vorzugsweise zumindest im Wesentlichen parallel zu einer Seite des Kofferaufnahmebereichs ausgerichtet sind.

Ferner wird vorgeschlagen, dass die Handwerkzeugkofferhaltevorrichtung eine Ladeelektronik umfasst, die dazu vorgesehen ist, einen Ladevorgang zumindest zu steuern, wodurch zumindest auf eine in dem Handwerkzeugkoffer angeordnete Ladeelektronik verzichtet werden kann. Dadurch ist eine besonders einfache Ausgestaltung des Handwerkzeugkoffers möglich. Unter einer "Ladeelektronik" soll insbesondere eine Elektronik verstanden werden, die von einem Ladezustand des Handwerkzeugakkus abhängig eine Energieübertragung an den Handwerkzeugakku steuert und/oder vorzugsweise regelt. Vorzugsweise fordert der Handwerkzeugakku von der Ladeelektronik eine Ladeleistung an.

Des Weiteren wird ein System mit einer erfindungsgemäßen Handwerkzeugkofferhaltevorrichtung und zumindest einem Handwerkzeugkoffer vorgeschlagen, der zumindest eine zu der Haltevorrichtung der Handwerkzeugkofferhaltevorrichtung korrespondierenden Haltevorrichtung aufweist, wodurch die Handwerkzeugkofferhaltevorrichtung vorteilhaft mit verschiedenen Handwerkzeugkoffern verbindbar ist. In diesem Zusammenhang soll unter "korrespondierend" insbesondere verstanden werden, dass die Haltevorrichtung des Handwerkzeugkoffers dazu vorgesehen ist, mit der Haltevorrichtung der Handwerkzeugkofferhaltevorrichtung eine lösbare mechanische Verbindung einzugehen. Vorzugsweise weist der Handwerkzeugkoffer neben der ersten Haltevorrichtung eine zweite Haltevorrichtung auf, die zu einer ersten Haltevorrichtung eines Handwerkzeugkoffers korrespondierend ausgebildet ist, wodurch mehrere Handwerkzeugkoffer mittels der Haltevorrichtungen verbunden vorteilhaft gestapelt und insbesondere transportiert werden können. Vorzugsweise ist die zweite Haltevorrichtung des Handwerkzeugkoffers identisch mit der Haltevorrichtung der Handwerkzeugkofferhaltevorrichtung ausgebildet.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einem Handwerkzeugkoffer und einer Handwerkzeugkofferhaltevorrichtung, die L-förmig ausgebildet ist,
- Fig. 2: die Handwerkzeugkofferhaltevorrichtung aus Figur 1 in einer perspektivischen Ansicht,
- Fig. 3: das System aus Figur 1 in einer Draufsicht,
- Fig. 4: ein weiteres Ausführungsbeispiel des Systems aus Figur 1 mit einer Handwerkzeugkofferhaltevorrichtung, die einen Kofferaufnahmebereich umschließt,
- Fig. 5: die Handwerkzeugkofferhaltevorrichtung aus Figur 4 in einer perspektivischen Ansicht,
- Fig. 6: das System aus Figur 4 in einer Draufsicht und
- Fig. 7: ein weiteres Ausführungsbeispiel des Systems aus Figur 1 mit einer Handwerkzeugkofferhaltevorrichtung mit einer schwenkbar gelagerten Ladespule.

### Beschreibung der Ausführungsbeispiele

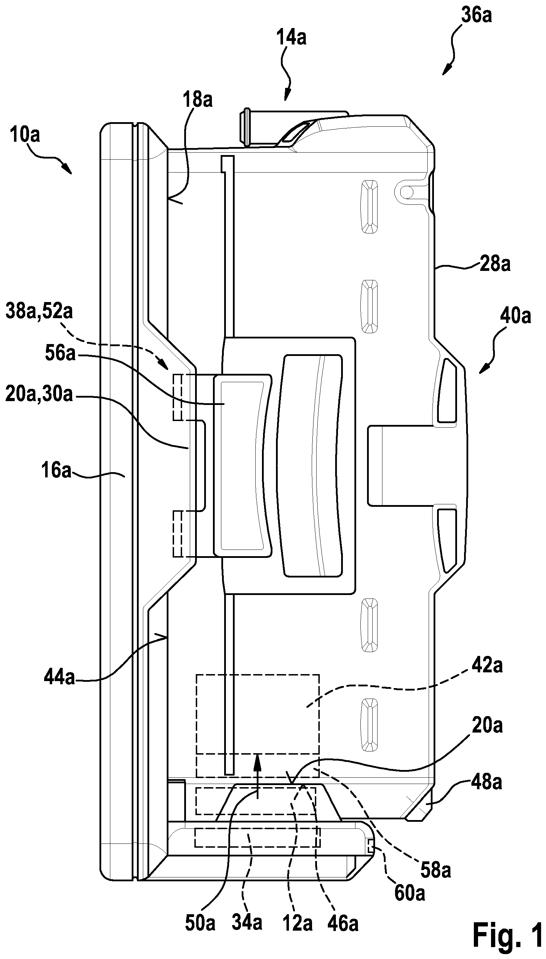

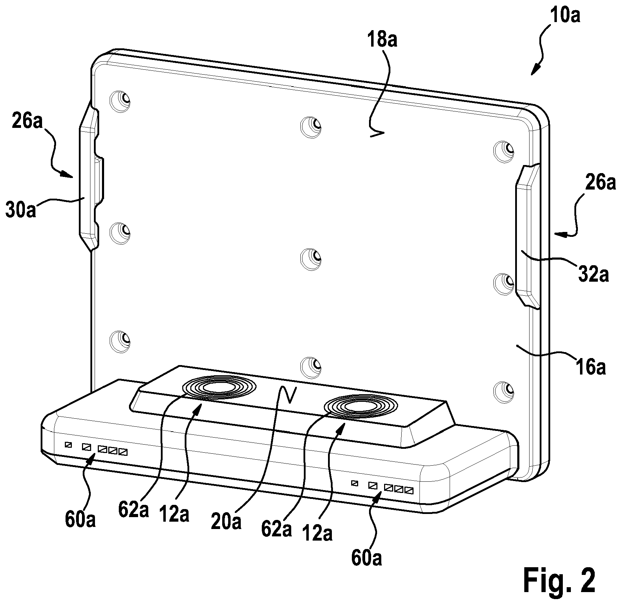

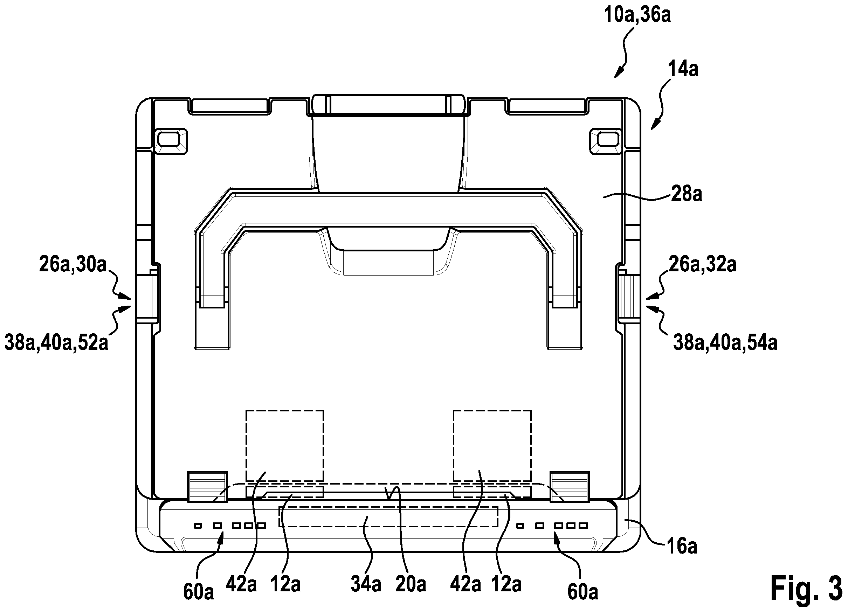

Die Figuren 1 bis 3 zeigen ein erstes Ausführungsbeispiel eines erfindungsgemäßen Systems 36a mit einer Handwerkzeugkofferhaltevorrichtung 10a, einem Handwerkzeugkoffer 28a und zwei bei einem Ladevorgang in dem Handwerkzeugkoffer 28a angeordneten Handwerkzeugakkus 42a. Der Handwerkzeugkoffer 28a weist eine erste Haltevorrichtung 38a und eine zweite Haltevorrichtung 40a auf. Die erste Haltevorrichtung 38a des Handwerkzeugkoffers 28a ist bei dem Ladevorgang mit einer Haltevorrichtung 26a der Handwerkzeugkofferhaltevorrichtung 10a verbunden. Somit ist sind die erste Haltevorrichtung 38a des Handwerkzeugkoffers 28a und die Haltevorrichtung 26a der Handwerkzeugkofferhaltevorrichtung 10a korrespondierend ausgebildet. Die zweite Haltevorrichtung 40a des Handwerkzeugkoffers 28a ist der Haltevorrichtung 26a der Handwerkzeugkofferhaltevorrichtung 10a entsprechend ausgebildet. Somit ist die zweite Haltevorrichtung 40a des Handwerkzeugkoffers 28a mit einer ersten Haltevorrichtung eines nicht näher dargestellten weiteren Handwerkzeugkoffers und/oder einer weiteren Handwerkzeugkofferhaltevorrichtung des Systems 36a verbindbar. Die Handwerkzeugkofferhaltevorrichtung 10a weist dazu eine nicht näher dargestellte zweite Haltevorrichtung auf, die entsprechend der ersten Haltevorrichtung 38a des Handwerkzeugkoffers 28a ausgebildet ist, und die eine Befestigung eines Handwerkzeugkoffers auf einer einem Kofferaufnahmebereich 14 der Handwerkzeugkofferhaltevorrichtung 10a abgewandten Seite ermöglicht.

Die Handwerkzeugkofferhaltevorrichtung 10a weist zwei Ladespulen 12a, den Kofferaufnahmebereich 14a, ein Haltevorrichtungsgehäuse 16a und eine Ladeelektronik 34a auf. Das Haltevorrichtungsgehäuse 16a weist eine erste Außenseite 18a und eine zweite Außenseite 20a auf. Die Außenseiten 18a, 20a sind dem Kofferaufnahmebereich 14a zugewandt ausgerichtet. Die Außenseiten 18a, 20a begrenzen den im Wesentlichen quaderförmigen Kofferaufnahmebereich 14a jeweils auf einer Seite. Die Außenseiten 18a, 20a sind senkrecht zueinander ausgerichtet. Somit ist die zweite Außenseite 20a dazu vorgesehen, eine Stützkraft parallel zu der ersten Außenseite 18a zu bewirken. Die erste Außenseite 18a liegt bei einem Ladevorgang an einem Boden 44a des Handwerkzeugkoffers 28a an. Die zweite Außenseite 20a liegt bei einem Ladevorgang an einer der Stirnseiten 46a des Handwerkzeugkoffers 28a an. Eine Deckelschwenkachse 48a des Handwerkzeugkoffers 28a ist ebenfalls an dieser Stirnseite 46a angeordnet. Alternativ könnte eine andere Seite eines Handwerkzeugkoffers an der zweiten Außenseite 20a angeordnet sein. Beispielsweise könnten eine erste Außenseite an einer Stirnseite oder einem Deckel und eine zweite Außenseite an einem Boden oder einem Deckel eines Handwerkzeugkoffers anliegen.

An der zweiten Außenseite 20a sind die Ladespulen 12a angeordnet. Die Ladespulen 12a liegen an einer der zweiten Außenseite 20a gegenüberliegenden Innenseite einer Wand des Haltevorrichtungsgehäuses 16a an. Wirkrichtungen 50a der Ladespulen 12a sind senkrecht zu der zweiten Außenseite 20a ausgerichtet. Zumindest eine der Ladespulen 12a überträgt bei einem Ladevorgang eine Energie durch die zweite Außenseite 20a in den Kofferaufnahmebereich 14a.

Die Haltevorrichtung 26a der Handwerkzeugkofferhaltevorrichtung 10a befestigt den Handwerkzeugkoffer 28a werkzeuglos lösbar. Dazu weist die Haltevorrichtung 26a zwei Haltemittel 30a, 32a auf, die in einem Betriebszustand mit zwei Haltemitteln 52a, 54a des Handwerkzeugkoffers 28a verrasten. Die Haltemittel 30a, 32a der Haltevorrichtung 26a sind auf zwei gegenüberliegenden Seiten des Kofferaufnahmebereichs 14a angeordnet. Die Haltemittel 30a, 32a sind an der ersten Außenseite 18a angrenzend angeordnet. Alternativ oder zusätzlich könnten Haltemittel an der zweiten Außenseite 20a angrenzend angeordnet sein. Die zwei Haltemittel 52a, 54a des Handwerkzeugkoffers 28a sind federnd gelagert. Sie werden bei einem Befestigungsvorgang ausgelenkt. Die Haltemittel 30a, 32a der Handwerkzeugkofferhaltevorrichtung 10a sind als Aussparungen ausgebildet, in die die Haltemittel 52a, 54a des Handwerkzeugkoffers 28a mit einer Bewegung nach außen einrasten. Dabei kann der Handwerkzeugkoffer 28a mit einer Bewegungsrichtung parallel zu der ersten Außenseite 18a und mit einer Bewegungsrichtung parallel zu der zweiten Außenseite 20a befestigt werden. Die erste Haltevorrichtung 38a des Handwerkzeugkoffers 28a weist ein Bedienelement 56a auf, mittels dessen ein Bediener eine Rastverbindung zwischen der Handwerkzeugkofferhaltevorrichtung 10a und dem Handwerkzeugkoffer 28a lösen kann.

Die Ladeelektronik 34a der Handwerkzeugkofferhaltevorrichtung 10a ist in einem Innenraum des Haltevorrichtungsgehäuses 16a angeordnet. Die Handwerkzeugakkus 42a fordern bei einem Ladevorgang eine Ladeleistung bei der Ladeelektronik 34a an. Die Ladeelektronik 34a steuert bei dem Ladevorgang eine an die Handwerkzeugakkus 42a übertragene Ladeleistung. Dazu überträgt die Ladeelektronik 34a über die Ladespule 12a der Handwerkzeugkofferhaltevorrichtung 10a und eine Ladespule 58a des Handwerkzeugakku 42a eine elektrische Energie an den Handwerkzeugakku 42a. Zudem kommuniziert die Ladeelektronik 34a auf eine dem Fachmann als sinnvoll erscheinende Art, insbesondere über die Ladespule und/oder über eine Funkstrecke, nach einem dem Fachmann als sinnvoll erscheinenden Protokoll, mit dem Handwerkzeugakku 42a. Die Handwerkzeugkofferhaltevorrichtung 10a weist Ausgabemittel 60a auf, die einem Bediener bei dem Ladevorgang einen Ladezustand anzeigt. Neben einem in dem Handwerkzeugkoffer 28a angeordneten Handwerkzeugakku 42a kann die Handwerkzeugkofferhaltevorrichtung 10a einen auf die zweite Außenseite 20a aufgelegten nicht näher dargestellten Handwerkzeugakku laden. Dazu weist die zweite Außenseite 20a eine Markierung 62a auf, die eine Position der Ladespulen 12a an der Außenseite 20a darstellt.

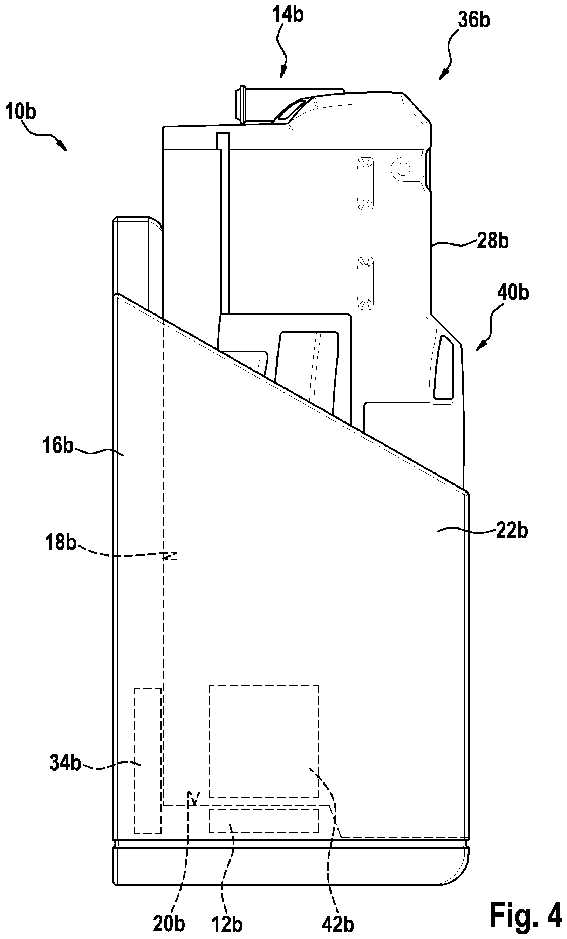

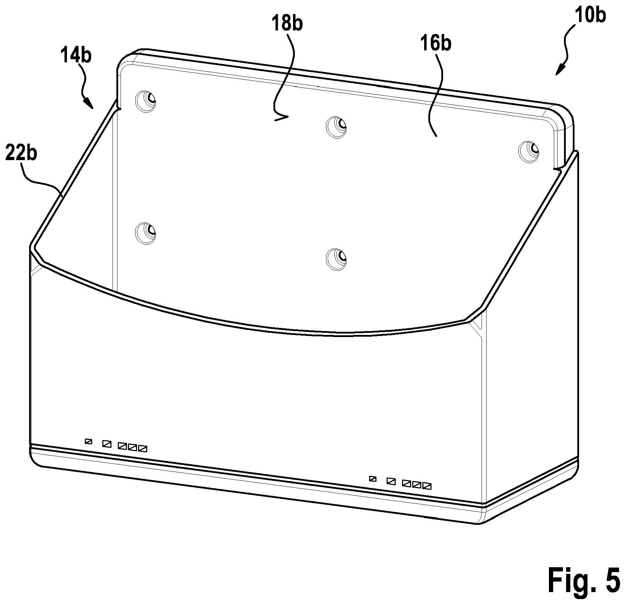

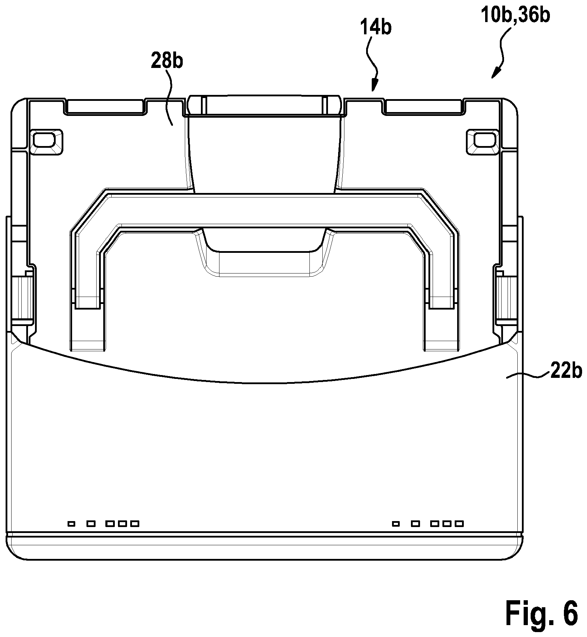

In den Figuren 4 bis 7 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 7 ist der Buchstabe a durch die Buchstaben b und c ersetzt.

Die Figuren 4 bis 6 zeigen ein System 36b mit einer Handwerkzeugkofferhaltevorrichtung 10b, einem Handwerkzeugkoffer 28b und einem bei einem Ladevorgang in dem Handwerkzeugkoffer 28b angeordneten Handwerkzeugakku 42b. Die Handwerkzeugkofferhaltevorrichtung 10b weist ein Haltevorrichtungsgehäuse 16b mit einem Kofferbefestigungsmittel 22b auf, das einen Kofferaufnahmebereich 14b des Haltevorrichtungsgehäuses 16b zu mehr als 50 Prozent umschließt. Das Kofferbefestigungsmittel 22b umschließt den Kofferaufnahmebereich 14b korbförmig.

Das Haltevorrichtungsgehäuse 16b weist zwei dem Kofferaufnahmebereich 14b zugewandte Außenseiten 18b, 20b auf. Die Außenseiten 18b, 20b sind zueinander senkrecht ausgerichtet. An einer der Außenseiten 18b, 20b ist eine Ladespule 12b der Handwerkzeugkofferhaltevorrichtung 10b angeordnet. Der Handwerkzeugkoffer 28b kann von einem Bediener parallel zu einer der Außenseiten 18b ohne eine Betätigung eines Bedienelements entnommen werden.

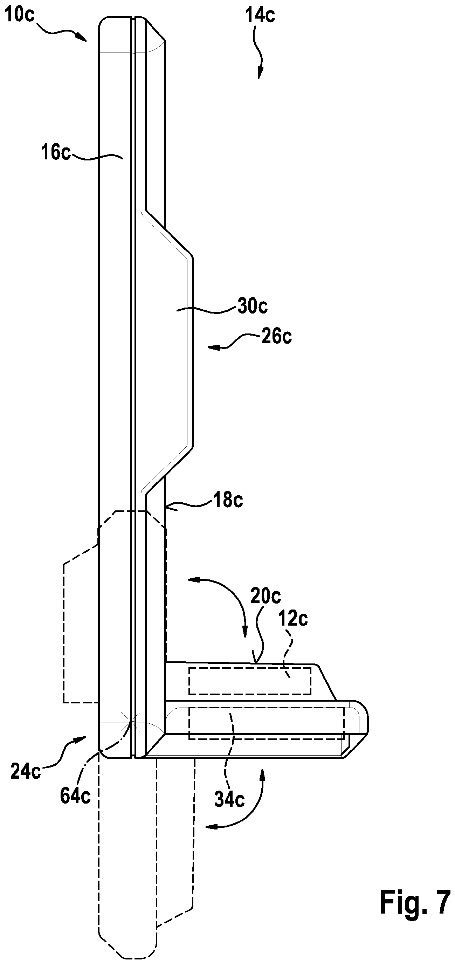

Die Figur 7 zeigt eine Handwerkzeugkofferhaltevorrichtung 10c eines erfindungsgemäßen Systems. Die Handwerkzeugkofferhaltevorrichtung 10c weist eine Ladespule 12c, eine erste Außenseite 18c, eine zweite Außenseite 20c, eine Schwenkvorrichtung 24c und eine Haltevorrichtung 26c auf. Die Ladespule 12c ist an der zweiten Außenseite 20c angeordnet. Die Haltevorrichtung 26c ist an der ersten Außenseite 18c angeordnet. Die Schwenkvorrichtung 24c lagert die Ladespule 12c relativ zu der ersten Außenseite 18c um eine Schwenkachse 64c schwenkbar.

## Patentansprüche

1. Handwerkzeugkofferhaltevorrichtung mit zumindest einer Ladespule (12a; 12b; 12c), einem Kofferaufnahmebereich (14a; 14b; 14c), einem Haltevorrichtungsgehäuse (16a; 16b; 16c), das eine erste dem Kofferaufnahmebereich (14a; 14b; 14c) zugewandte Außenseite (18a; 18b; 18c) aufweist, wobei das Haltevorrichtungsgehäuse (16a; 16b; 16c) wenigstens eine zweite in zumindest einem Betriebszustand dem Kofferaufnahmebereich (14a; 14b; 14c) zugewandte Außenseite (20a; 20b; 20c) aufweist, die im Wesentlichen senkrecht zu der ersten Außenseite (18a; 18b; 18c) ausgerichtet ist und an der die Ladespule (12a; 12b; 12c) angeordnet ist, und mit einer Haltevorrichtung (26a; 26c), die dazu vorgesehen ist, einen Handwerkzeugkoffer (28a) lösbar zu befestigen, **dadurch gekennzeichnet, dass** die Haltevorrichtung (26a; 26c) zwei Haltemittel (30a, 32a; 30c) aufweist, die auf zwei gegenüberliegenden Seiten des Kofferaufnahmebereichs (14a; 14c) angeordnet sind.

2. Handwerkzeugkofferhaltevorrichtung nach Anspruch 1, **dadurch gekennzeichnet, dass** die zweite Außenseite (20a; 20b; 20c) dazu vorgesehen ist, eine Stützkraft parallel zu der ersten Außenseite (18a; 18b; 18c) zu bewirken.

3. Handwerkzeugkofferhaltevorrichtung nach einem der vorhergehenden Ansprüche, **gekennzeichnet durch** eine Schwenkvorrichtung (24c), die dazu vorgesehen ist, die Ladespule (12c) relativ zu der ersten Außenseite (18c) schwenkbar zu lagern.

4. Handwerkzeugkofferhaltevorrichtung nach einem der vorhergehenden Ansprüche, **dadurch gekennzeichnet, dass** die Haltevorrichtung (26a; 26c) zumindest ein Haltemittel (30a, 32a; 30c) aufweist, das dazu vorgesehen ist, den Handwerkzeugkoffer (28a; 28c) zu verrasten.

5. Handwerkzeugkofferhaltevorrichtung mit zumindest einer Ladespule (12b), einem Kofferaufnahmebereich (14b), einem Haltevorrichtungsgehäuse (16b), das eine erste dem Kofferaufnahmebereich (14b) zugewandte Außenseite (18b) aufweist wobei das Haltevorrichtungsgehäuse (16b) wenigstens eine zweite in zumindest einem Betriebszustand dem Kofferaufnahmebereich (14b) zugewandte Außenseite (20b) aufweist, die im Wesentlichen senkrecht zu der ersten Außenseite (18b) ausgerichtet ist und an der die Ladespule (12b) angeordnet ist, **dadurch gekennzeichnet, dass** ein Kofferbefestigungsmittel (22b) den Kofferaufnahmebereich (14b) korbförmig umschließt.

6. Handwerkzeugkofferhaltevorrichtung nach einem der vorhergehenden Ansprüche, **dadurch gekennzeichnet, dass** die Ladespule (12a; 12b; 12c) dazu vorgesehen ist, eine Energie durch die zweite Außenseite (20a; 20b; 20c) zu übertragen.

7. Handwerkzeugkofferhaltevorrichtung nach einem der vorhergehenden Ansprüche, **gekennzeichnet durch** eine Ladeelektronik (34a; 34b; 34c), die dazu vorgesehen ist, einen Ladevorgang zumindest zu steuern.

8. System mit einer Handwerkzeugkofferhaltevorrichtung zumindest nach Anspruch 1, und zumindest einem Handwerkzeugkoffer (28a), der zumindest eine zu der Haltevorrichtung (26a; 26c) der Handwerkzeugkofferhaltevorrichtung (10a; 10c) korrespondierende Haltevorrichtung (38a, 40a) aufweist.

## Claims

1. Portable-tool case holding device having at least one charging coil (12a; 12b; 12c), a case receiving region (14a; 14b; 14c), a holding device housing (16a; 16b; 16c) that has a first outer side (18a; 18b; 18c) facing the case receiving region (14a; 14b; 14c), wherein the holding device housing (16a; 16b; 16c) has at least one second outer side (20a; 20b; 20c) that faces the case receiving region (14a; 14b; 14c) in at least one operating state, is oriented substantially perpendicularly to the first outer side (18a; 18b; 18c) and on which the charging coil (12a; 12b; 12c) is arranged, and having a holding device (26a; 26c) that is provided to releasably fasten a portable-tool case (28a), **characterized in that** the holding device (26a; 26c) has two holding means (30a, 32a; 30c) that are arranged on two opposite sides of the case receiving region (14a; 14c).

2. Portable-tool case holding device according to Claim 1, **characterized in that** the second outer side (20a; 20b; 20c) is intended to effect a supporting force parallel to the first outer side (18a; 18b; 18c).

3. Portable-tool case holding device according to either of the preceding claims, **characterized by** a pivoting device (24c) that is intended to mount the charging coil (12c) in a pivotable manner relative to the first outer side (18c).

4. Portable-tool case holding device according to one of the preceding claims, **characterized in that** the holding device (26a; 26c) has at least one holding means (30a, 32a; 30c) that is intended to latch the portable-tool case (28a; 28c) in place.

5. Portable-tool case holding device having at least one charging coil (12b), a case receiving region (14b), a holding device housing (16b) that has a first outer side (18b) facing the case receiving region (14b), wherein the holding device housing (16b) has at least one second outer side (20b) that faces the case receiving region (14b) in at least one operating state, is oriented substantially perpendicularly to the first outer side (18b) and on which the charging coil (12b) is arranged, **characterized in that** a case fastening means (22b) encloses the case receiving region (14b) in a basket-like manner.

6. Portable-tool case holding device according to one of the preceding claims, **characterized in that** the charging coil (12a; 12b; 12c) is intended to transmit energy through the second outer side (20a; 20b; 20c).

7. Portable-tool case holding device according to one of the preceding claims, **characterized by** charging electronics (34a; 34b; 34c) that are intended at least to control a charging operation.

8. System having a portable-tool case holding device at least according to Claim 1, and at least one portable-tool case (28a) that has at least one holding device (38a, 40a) corresponding to the holding device (26a; 26c) of the portable-tool case holding device (10a; 10c).

## Revendications

1. Dispositif de maintien pour mallette à outil manuel, comprenant au moins une bobine de charge (12a ; 12b ; 12c), une zone d'accueil de mallette (14a ; 14b ; 14c), un boîtier de dispositif de maintien (16a ; 16b ; 16c), qui possède un premier côté extérieur (18a ; 18b ; 18c) faisant face à la zone d'accueil de mallette (14a ; 14b ; 14c), le boîtier de dispositif de maintien (16a ; 16b ; 16c) possédant au moins un deuxième côté extérieur (20a ; 20b ; 20c) faisant face à la zone d'accueil de mallette (14a ; 14b ; 14c) dans au moins un état opérationnel, lequel est orienté sensiblement perpendiculairement au premier côté extérieur (18a ; 18b ; 18c) et au niveau duquel est disposée la bobine de charge (12a ; 12b ; 12c), et comprenant un dispositif de maintien (26a ; 26c) qui est conçu pour fixer de manière amovible une mallette à outil manuel (28a), **caractérisé en ce que** le dispositif de maintien (26a ; 26c) possède deux moyens de maintien (30a, 32a ; 30c) qui sont disposés sur deux côtés opposés de la zone d'accueil de mallette (14a ; 14c).

2. Dispositif de maintien pour mallette à outil manuel selon la revendication 1, **caractérisé en ce que** le deuxième côté extérieur (20a ; 20b ; 20c) est conçu pour produire une force d'appui parallèle au premier côté extérieur (18a ; 18b ; 18c).

3. Dispositif de maintien pour mallette à outil manuel selon l'une des revendications précédentes, **caractérisé par** un dispositif pivotant (24c) qui est conçu pour loger la bobine de charge (12c) de manière pivotante par rapport au premier côté extérieur (18c).

4. Dispositif de maintien pour mallette à outil manuel selon l'une des revendications précédentes, **caractérisé en ce que** le dispositif de maintien (26a ; 26c) possède au moins un moyen de maintien (30a, 32a ; 30c) qui est conçu pour l'enclipsage de la mallette à outil manuel (28a ; 28c).

5. Dispositif de maintien pour mallette à outil manuel, comprenant au moins une bobine de charge (12b), une zone d'accueil de mallette (14b), un boîtier de dispositif de maintien (16b), qui possède un premier côté extérieur (18b) faisant face à la zone d'accueil de mallette (14b), le boîtier de dispositif de maintien (16b) possédant au moins un deuxième côté extérieur (20b) faisant face à la zone d'accueil de mallette (14b) dans au moins un état opérationnel, lequel est orienté sensiblement perpendiculairement au premier côté extérieur (18b) et au niveau duquel est disposée la bobine de charge (12b), **caractérisé en ce qu'**un moyen de fixation de mallette (22b) entoure la zone d'accueil de mallette (14b) en forme de panier.

6. Dispositif de maintien pour mallette à outil manuel selon l'une des revendications précédentes, **caractérisé en ce que** la bobine de charge (12a ; 12b ; 12c) est conçue pour transmettre une énergie à travers le deuxième côté extérieur (20a ; 20b ; 20c).

7. Dispositif de maintien pour mallette à outil manuel selon l'une des revendications précédentes, **caractérisé par** une électronique de charge (34a ; 34b ; 34c) qui est conçue pour au moins commander une opération de charge.

8. Système comprenant un dispositif de maintien pour mallette à outil manuel au moins selon la revendication 1, et au moins une mallette à outil manuel (28a) qui possède au moins un dispositif de maintien (38a, 40a) correspondant au dispositif de maintien (26a ; 26c) du dispositif de maintien pour mallette à outil manuel (10a ; 10c).
